# EUROPÄISCHE PATENTANMELDUNG

(11) **EP 4 570 633 A1**
(43) Veröffentlichungstag der Anmeldung: **18.06.2025**
(21) Anmeldenummer: 23217216.3
(22) Anmeldetag: 15.12.2023
(51) Int. Cl.: B62D 37/02, B62D 35/00

(54) **VORRICHTUNG ZUM ERHÖHEN EINES ANPRESSDRUCKS BEI EINEM KRAFTFAHRZEUG UND DAMIT AUSGESTATTETES KRAFTFAHRZEUG**

(71) Anmelder: Blue Technologies BV, 4387 PK Vlissingen (NL)
(72) Erfinder: Benner, Moritz, 61279 Grävenwiesbach (DE)
(74) Vertreter: Wunderlich & Heim Patentanwälte PartG mbB

(57) **Zusammenfassung**

Die Erfindung betrifft eine Vorrichtung zum Erhöhen eines Anpressdrucks bei einem Kraftfahrzeug, insbesondere Sport- oder Rennwagen, mit einem als Ansaugeinrichtung wirkenden Ventilator (5), einer Ansaugkanalanordnung (1), die mehrere Ansaugöffnungen (9,10,13,14) aufweist und mit dem Ventilator (5) gekoppelt ist, um Luft durch die Ansaugöffnungen (9,10,13,14) abzusaugen und durch den Ventilator (5) auszustossen, wobei die Ansaugkanalanordnung (1) und die Ansaugöffnungen (9,10,13,14) so angeordnet und ausgestaltet sind, dass sie an einem Kraftfahrzeug anbringbar ist, um Luft im Bereich eines Unterbodens des Kraftfahrzeuges an mehreren in Längs- und/oder Querrichtung des Unterbodens beabstandeten Bereichen abzusaugen und durch Erzeugen eines lokalen Unterdrucks einen Anpressdruck des Kraftfahrzeugs gegen eine Fahrbahnoberfläche zu erhöhen, und mindestens einem Ventilmittel (15,16,17,18), das an der Ansaugkanalanordnung (1) vorgesehen ist, um eine von zumindest einigen der Ansaugöffnungen (9,10,13,14) angesaugte Luftmenge einzustellen. Eine Steuereinrichtung ist vorgesehen, die mit dem mindestens einen Ventilmittel (15,16,17,18) zur Ansteuerung desselben gekoppelt ist, um das mindestens eine Ventilmittel (15,16,17,18) vorzugsweise abhängig von einer Fahrsituation selektiv anzusteuern. Dadurch kann gezielt bestimmt werden, wo am Unterboden welche Menge an Luft abgesaugt wird, so dass die Verteilung der Unterdruckzonen unter dem Fahrzeug und damit der Anpressdruck fahrsituationsspezifisch angepasst und der Grip insbesondere bei Kurvenfahrt maximiert werden kann.

## Beschreibung

Die Erfindung betrifft eine Vorrichtung zum Erhöhen eines Anpressdrucks bei einem Kraftfahrzeug, insbesondere Sport- oder Rennwagen, gemäß dem Anspruch 1 und ein damit ausgestattetes entsprechendes Kraftfahrzeug, insbesondere Sport- oder Rennwagen, gemäß dem Anspruch 15.

Bei der Konstruktion von Kraftfahrzeugen bezeichnet der sogenannte Bodeneffekt eine Reihe von Effekten, die in der Automobil-Aerodynamik genutzt werden, um den Abtrieb und damit den Anpressdruck des Kraftfahrzeugs auf die Fahrbahn zu erhöhen, insbesondere bei Rennwagen im Motorsport.

Als Alternative zum Bodeneffekt werden bei der Konstruktion von Rennwagen routinemäßig "Flügelelemente" eingesetzt, um den Abtrieb zu erhöhen. Der Einsatz von Flügeln erhöht aber den Luftwiderstand.

Bei Renn- und Sportwagen ist es das Ziel der Konstrukteure, den Anpressdruck und die Bodenhaftung zu erhöhen, um höhere Kurvengeschwindigkeiten zu ermöglichen. Ein Teil des Abtriebs wird dadurch erreicht, dass der Boden als Teil des betreffenden aerodynamischen Systems betrachtet wird. Als Bodeneffekt bezeichnet man ein physikalisches Phänomen, das ein umströmter Körper in Bodennähe erfährt und der zu einem zusätzlichen dynamischen Auftrieb oder auch Abtrieb führt.

Der negative Bodeneffekt (Abtrieb) kann im Motorsport genutzt werden, da für hohe Geschwindigkeiten konstruierte Fahrzeuge, wie beispielsweise in der Formel 1 oder Indy-Car, nicht nur wegen des günstigeren Schwerpunkts eine geringe Bodenfreiheit haben.

In der Formel 1 wird der Venturi-Effekt über sogenannte Venturi-Tunnel erzeugt. Hierbei wird die frontal anströmende Luft über zwei voluminöse Eingänge vor den Sidepods in zwei Tunnel aufgenommen, die die Luft unter den Unterboden des Fahrzeugs führen. Die Abdeckungen der Venturi-Tunnel nähern sich in ihrem Verlauf immer mehr der Fahrbahnoberfläche an, so dass die durch die Venturi-Tunnel in Richtung der Fahrbahnoberfläche gedrängte Luft unter dem Fahrzeug durch die Verengung beschleunigt wird. Aufgrund des "Bernoulli Gesetzes" nimmt der statische (senkrecht zum Luftstrom laufende) Druck eines strömenden Gases mit zunehmender Geschwindigkeit ab. Je schneller die Luft unter einem Fahrzeug beschleunigt wird, desto mehr wird das Fahrzeug durch die beschleunigte Luft zum Boden "gesaugt".

Diese Technik ist - anders als Flügelelemente - stark von der Lage des Fahrzeugs zur Fahrbahnoberfläche abhängig. Hebt sich das Fahrzeug zu weit von der Fahrbahnoberfläche ab - zum Beispiel beim Überfahren von Randsteinen - reißt der über die Venturi-Tunnel generierte Anpressdruck schlagartig ab. Die Folge des plötzlichen Verlusts von Anpressdruck ist eine mögliche Instabilität des Fahrzeugs oder das als "Porpoising" bezeichnete Phänomen aerodynamischer Vibrationen, eine Art Hüpfen des Fahrzeugs bei hoher Geschwindigkeit, das durch einen wiederholten Wechsel von verstärkter Ansaugung des Fahrzeugs an die Fahrbahnoberfläche bei zunehmender Geschwindigkeit und kurzzeitigem Abtriebsverlust durch Abriss der Strömung - meist oberhalb von 250 km/h - durch eine Art Kurzschluss, der zu einer Anhebung des Fahrzeugs durch dessen Federung führt.

Das Konzept einer Anpressdruckverstärkung durch Erzeugen eines Unterdrucks unter dem Fahrzeug ist seit den siebziger-Jahren grundsätzlich bekannt. Jedoch waren darauf basierende Fahrzeuge fahrzeug- und fahrtechnisch schwer zu beherrschen.

**Aufgabe** der Erfindung ist die Bereitstellung einer Vorrichtung zum Erhöhen eines Anpressdrucks bei einem Kraftfahrzeug, insbesondere Sport- oder Rennwagen, und eines damit ausgestatteten entsprechenden Kraftfahrzeugs, die ein besonders effizientes Anpressen ermöglichen, insbesondere die Nachteile des Bodeneffekts und der Flügelelemente sowie der bisherigen Ansätze der Anpressdruckverstärkung durch Erzeugen eines Unterdrucks überwinden.

Die Aufgabe wird nach der Erfindung durch eine Vorrichtung zum Erhöhen eines Anpressdrucks bei einem Kraftfahrzeug, insbesondere Sport- oder Rennwagen, mit den Merkmalen des Patentanspruches 1 und ein damit ausgestattetes entsprechendes Kraftfahrzeug mit den Merkmalen des Patentanspruches 15 gelöst. Bevorzugte Ausgestaltungen der Vorrichtung sind in den abhängigen Patentansprüchen angegeben.

Insbesondere schlägt die Erfindung eine Vorrichtung zum Erhöhen eines Anpressdrucks bei einem Kraftfahrzeug, insbesondere einem Sport- oder Rennwagen, vor, mit einem als Ansaugeinrichtung wirkenden Ventilator, einer Ansaugkanalanordnung, die mehrere Ansaugöffnungen aufweist und mit dem Ventilator gekoppelt ist, um Luft durch die Ansaugöffnungen abzusaugen und durch den Ventilator auszustossen, wobei die Ansaugkanalanordnung und die Ansaugöffnungen so angeordnet und ausgestaltet sind, dass sie an einem Kraftfahrzeug anbringbar ist, um Luft im Bereich eines Unterbodens des Kraftfahrzeuges an mehreren in Längs- und/oder Querrichtung des Unterbodens beabstandeten Bereichen abzusaugen und durch Erzeugen eines lokalen Unterdrucks einen Anpressdruck des Kraftfahrzeugs gegen eine Fahrbahnoberfläche zu erhöhen, mindestens einem Ventilmittel, das an der Ansaugkanalanordnung vorgesehen ist, um eine von zumindest einigen der Ansaugöffnungen angesaugte Luftmenge einzustellen, und einer Steuereinrichtung, die mit dem mindestens einen Ventilmittel zur Ansteuerung desselben gekoppelt ist, um das mindestens eine Ventilmittel vorzugsweise abhängig von einer Fahrsituation selektiv anzusteuern.

Der als Ansaugeinrichtung wirkende Ventilator saugt im Betrieb der Vorrichtung Luft über die Ansaugkanalanordnung unter dem Unterboden des Fahrzeugs ab. Mit Hilfe des Ventilmittels, das über die Steuereinrichtung elektronisch gesteuert wird, und die Verteilung der Ansaugöffnungen kann gezielt (selektiv) - vorzugsweise abhängig von einer Fahrsituation - bestimmt werden, wo am Unterboden welche Menge an Luft abgesaugt wird. Es können sozusagen durch einen oder mehrere zentrale Ventilatoren, welche vorzugsweise gleichmäßig arbeiten und einen gleichbleibenden Unterdruck erzeugen, über das eine oder die mehreren Ventilmittel und deren gezielte Ansteuerung mit einem individuellen Einstellen einer Ventilöffnung sehr schnell über den Unterboden differenzierte, unterschiedliche lokale Anpressdrücke erzeugt werden.

Grundsätzlich bietet die erfindungsgemäße Vorrichtung den Vorteil, dass der durch den erhöhten Anpressdruck gesteigerte Grip und die verbesserte Manövrierbarkeit des Fahrzeugs, in das die Vorrichtung eingebaut ist, bei allen Geschwindigkeiten und angepasst an die jeweilige Fahrsituation bereitgestellt werden, da der Unterdruck unter dem Fahrzeug unabhängig von der Geschwindigkeit stets bereitgestellt und zusätzlich die Verteilung der Unterdruckzonen unter dem Fahrzeug fahrsituationsspezifisch angepasst werden kann.

Insbesondere in Kurvenfahrten kann die erreichbare und fahrtechnisch beherrschbare Kurvengeschwindigkeit erheblich gesteigert werden, beispielsweise durch Vergrößerung des Absaugvolumens an der Kurveninnenseite ein relativ zur Kurvenaußenseite höherer Unterdruck unter dem Fahrzeug erzeugt werden, so dass ein dem aus der Querkraft resultierenden Kippmoment entgegenwirkender höherer Anpressdruck an der Kurveninnenseite erzeugt werden kann. Entsprechendes gilt für eine Modifikation der Front-Heck-Verteilung des Unterdrucks bzw. Anpressdrucks beispielsweise bei Beschleunigung oder Verzögerung des Fahrzeugs oder aber auch bei Kurvenfahrt um ggf. einem heckseitigen Ausbrechen des Fahrzeugs entgegenzuwirken.

Der Begriff "Ventilmittel" ist im Rahmen der vorliegenden Anmeldung weitgehend zu verstehen und kann auch eine Anordnung von mehreren über die Ansaugkanalanordnung verteilten Ventilen umfassen, welche die fahrsituationsspezifische Anpassung der Verteilung der Unterdruckzonen unter dem Fahrzeug bzw. deren Unterdruckniveau durch Einstellung der über die jeweiligen verteilten Ansaugöffnungen abgesaugten Luftmengen bewirken.

Das mindestens eine Ventilmittel ist vorzugsweise ein mechanisch betätigtes Stellventil, insbesondere ein elektromagnetisch oder elektromotorisch oder pneumatisch betätigtes Stellventil. Besonders geeignet für die Einstellung von größeren Fluid-Durchtrittsmengen sind elektromagnetisch oder elektromotorisch oder pneumatisch betätigte Scheiben- oder Klappenventile. Die mechanische Betätigung erlaubt eine schnelle Ansteuerung und Betätigung aus der Ferne über die Steuereinrichtung sowie ggf. die Überwachung und Rückmeldung der konkreten Stellpositionen.

Die Steuereinrichtung ist vorzugsweise konfiguriert, um das mindestens eine Ventilmittel so anzusteuern, dass die durch die Absaugung der Luft erzeugten Bereiche lokalen Unterdrucks in der Längs- und/oder Querrichtung des Unterbodens verschiedene Unterdrücke aufweisen, indem durch selektives Öffnen und Schließen der Ventilmittel die angesaugten Luftmengen bereichsweise verändert werden.

Die Steuereinrichtung kann die Ansteuerung der Ventilmittel beispielsweise mittels programmierter Kennfelder oder vordefinierter Funktionen vornehmen, welche die fahrsituationsbezogenen Parameter wie Lenkeinschlag, Querbeschleunigung, Längsbeschleunigung, Verzögerung, Geschwindigkeit und/oder charakteristische Bewegungen des Fahrzeugs wie Stampfen (vertikale, geradlinige Schwingung längs der z-Achse, also das wechselseitige Steigen und Sinken der Karosserie in der Federung), Wippen oder Nicken (Rotationsbewegungen um die y-Achse, die zum Beispiel beim Bremsen oder Beschleunigen als Folge der dynamischen Achslastverschiebungen entstehen, aber auch beim Fahren über Unebenheiten), Wanken oder Rollen (Rotationsbewegungen um die x-Achse als Neigen nach außen in der Kurve, aber auch bei Windböen) und Gieren (Rotationsbewegungen um die z-Achse bei Kurvenfahrten) sowie ggf. Umgebungsparameter wie Luftdruck, Temperatur, Windgeschwindigkeit und -richtung sowie Luftfeuchtigkeit bestimmten Einstellungen des Ventilmittels zuordnen.

Die fahrsituationsbezogenen Parameter können über bordeigene Sensoren und/oder eine Steuerungselektronik des Fahrzeugs ermittelt und an die Steuerungseinrichtung übertragen werden. Umgebungsparameter können ebenfalls von Fahrzeugsensoren ermittelt oder von externen Datenquellen abgefragt werden.

Vorzugsweise ist mindestens eine Ansaugöffnung an einer linken Fahrzeugseite und eine andere Ansaugöffnung ist an einer rechten Fahrzeugseite, jeweils bezogen auf eine Fahrzeug-Mittelachse in Längsrichtung im eingebauten Zustand, angeordnet. Diese Anordnung von einer oder mehreren Ansaugöffnungen an den beiden linken und rechten Seiten ermöglicht in Verbindung mit der Ansteuerung des Ventilmittels die vorteilhafte Erhöhung des Ansaugvolumens an der einen Querseite zu Lasten der anderen Querseite und damit eine für eine Kurvenfahrt günstige Verteilung der Anpresskräfte beidseitig der Mittel-Längsachse.

Vorzugsweise ist mindestens eine Ansaugöffnung in einem vorderen Bereich des Fahrzeugs und mindestens eine andere Ansaugöffnung in einem hinteren Bereich des Fahrzeugs, jeweils bezogen auf eine Fahrzeug-Mittelachse in Querrichtung im eingebauten Zustand, angeordnet. Diese Anordnung von einer oder mehreren Ansaugöffnungen im Frontbereich und im Heckbereich ermöglicht in Verbindung mit der Ansteuerung des Ventilmittels die vorteilhafte Erhöhung des Ansaugvolumens der Front zu Lasten des Hecks (und umgekehrt) und damit eine für eine Beschleunigung/Verzögerung günstige Verteilung der Anpresskräfte beidseitig der MittelQuerachse.

Diese Anordnung von Ansaugöffnungen kann in vorteilhafter Weise mit der Anordnung und Verteilung beidseitig der Mittel-Längsachse kombiniert werden, so dass - mit entsprechender Ausgestaltung des Ventilmittels - eine Steuerung der Unterdruckverteilung über einem großen Bereich des Unterbodens in Anpassung an komplexe Krafteinwirkungen bei bestimmten Fahrsituationen erreicht werden kann. Diese Ausgestaltung bietet eine Möglichkeit, das Fahrverhalten auch bei komplexen Fahrsituationen über eine zentrale Steuerung der
Vorzugsweise sind die an einer/der auf eine Fahrzeug-Mittelachse in Längsrichtung im eingebauten Zustand bezogenen linken Fahrzeugseite angeordnete mindestens eine Ansaugöffnung über einen ersten Ansaugstrang und die an einer/der auf die Fahrzeug-Mittelachse in Längsrichtung im eingebauten Zustand bezogenen rechten Fahrzeugseite angeordnete mindestens eine Ansaugöffnung über einen zumindest abschnittsweise von dem ersten Ansaugstrang getrennten zweiten Ansaugstrang mit dem Ventilator leitungsverbunden. Diese Anordnung ermöglicht eine platzsparende Verlegung der getrennten Ansaugstränge am Unterboden gemäß den Einschränkungen durch andere Konstruktionsparameter. Die Verlegung der getrennten Ansaugstränge an den Außenseiten des Unterbodens in der Querrichtung kann ggf. dazu beitragen, den Unterboden zu segmentieren und gegenüber der Umgebung zumindest teilweise abzuschließen, um ein Eindringen von Luft an den Längsseiten zu verringern.

Vorzugsweise sind der der erste und der zweite Ansaugstrang über mindestens einen Verbindungsstrang miteinander gekoppelt. Das Vorsehen eines Verbindungsstrangs oder mehrerer Verbindungsstränge ermöglicht, ggf. in Verbindung mit einem weiteren Ventilmittel, die Bildung von mehreren oder unterschiedlich großen Unterdruckzonen in der Längsrichtung, ohne notwendig die Anzahl der Ansaugstränge erhöhen zu müssen.

Vorzugsweise ist die Steuereinrichtung konfiguriert, um das mindestens eine Ventilmittel und den Ventilator so anzusteuern, dass ein über Ansaugöffnungen in die Ansaugkanalanordnung aufgrund eines Fahrtwinds aufgenommener Luftstrom den Ventilator antreibt und dieser als Generator arbeitet. Mit dieser Betriebsart kann in Phasen, in denen der Ventilator nicht als Saugvorrichtung arbeitet, durch Rekuperation elektrische Energie erzeugt und zum Laden einer Bordbatterie oder für andere Verbraucher genutzt werden, um den Verbrauch des Fahrzeugs zu senken.

Eine weitere funktionale Erweiterung der Vorrichtung besteht darin, dass die Ansaugkanalanordnung einen weiteren Ansaugstrang aufweist, der zu einem Motorraum des Fahrzeugs führt. Die Ansaugkanalanordnung weist dazu vorzugsweise ein weiteres, dem weiteren Ansaugstrang zugeordnetes Ventilmittel auf, und die Steuereinrichtung ist konfiguriert, um das weitere Ventilmittel und den Ventilator, vorzugsweise in Abhängigkeit von einer Temperatur des Motorraums, anzusteuern, um warme Luft zur Kühlung des Motorraums von diesem abzusaugen. Damit kann die Vorrichtung gleichzeitig mit der Erzeugung des Anpressdrucks durch Absaugen der Luft unter dem Fahrzeug durch zusätzliches Absaugen warmer Luft aus dem Motorraum auch als Komponente eines Temperaturmanagements des Fahrzeugs wirken. In Abhängigkeit eines ggf. bestehenden Reglements kann die Funktion der Absaugung der warmen Luft aus dem Motorraum so eingestellt werden, dass ein größerer Anteil des durch den Ventilator abgesaugten Luftvolumens auf diese Funktion bzw. diesen Ansaugstrang entfällt.

Vorzugsweise weist die Vorrichtung zumindest zwei als die Ansaugeinrichtung wirkende Ventilatoren auf, die in separaten Kammern eines Ansauggehäuses oder in separaten Ansauggehäusen angeordnet sind, die wiederum mit separaten Ansaugsträngen der Ansaugkanalanordnung kommunizieren. Mit dieser Ausgestaltung kann zum einen die Ansaugkapazität der Ansaugeinrichtung vergrößert werden, ohne dass beispielsweise ein Durchmesser des (einzelnen) Ventilators vergrößert werden muss. Das erleichtert den aerodynamisch vorteilhaften Einbau der Vorrichtung in ein Chassis des Fahrzeugs, insbesondere im Heckbereich. Außerdem kann durch getrenntes Ansteuern der Ventilatoren durch die Steuereinrichtung zusätzlicher Einfluss auf die Erzeugung von Unterdruckzonen mit unterschiedlichem Unterdruck genommen werden, wenn beispielswiese der dem einen (z.B. linken) Ansaugstrang zugeordnete Ventilator relativ zu dem anderen (z.B. rechten) Ansaugstrang zugeordneten Ventilator gedrosselt wird.

Um die effiziente Absaugung der Luft aus einer dedizierten Unterdruckzone unter dem Unterboden zu gewährleisten können die Ansaugöffnungen trichterartige Einlasserweiterungen haben, die zu dem abzusaugenden Bereich des Unterbodens gerichtet sind.

Eine weitere vorteilhafte Ausführungsvariante der Erfindung liegt darin, dass entlang einer Ansaugleitungen zwischen der Ansaugöffnung und dem Ventilator mindestens ein Zwischenventilator angeordnet ist. Der mindestens eine Zwischenventilator kann über je einen Elektromotore drehend angetrieben werden. Insbesondere bei längeren Ansaugleitungen kann so die Luftansaugung durch den zentralen Ventilator unterstützt werden.

Schließlich betrifft die Erfindung auch ein Kraftfahrzeug, insbesondere einen Sport- oder Rennwagen, mit einer erfindungsgemäßen Vorrichtung zum Erhöhen eines Anpressdrucks bei diesem Kraftfahrzeug, wobei die Ansaugkanalanordnung so an dem Kraftfahrzeug angebracht ist, dass im Betrieb Luft im Bereich eines Unterbodens einer Karosserie des Kraftfahrzeugs über die mehreren Ansaugöffnungen an mehreren in Längs- und/oder Querrichtung des Unterbodens beabstandeten Bereichen selektiv abgesaugt werden kann, um durch Erzeugen eines lokalen Unterdrucks einen Anpressdruck des Fahrzeugs gegen eine Fahrbahnoberfläche zu erhöhen. Ein solches Fahrzeug kann durch den erhöhten Anpressdruck erheblich höhere Antriebsmomente und insbesondere sehr hohe Querkräfte auf die Fahrbahnoberfläche übertragen, und zwar relativ unabhängig von der Fahrgeschwindigkeit und Fahrsituation (z.B. Kurvenfahrt).

Der Unterboden des Fahrzeugs kann ggf. durch Schürzen oder Blenden gegenüber der Umgebung abgeschlossen oder in Zonen segmentiert sein, in denen die jeweiligen beabstandeten Ansaugöffnungen angeordnet sind. Dadurch kann eine genauere Abgrenzung der verschiedenen Unterdruckzonen erreicht werden, da der Luftaustausch zwischen den Zonen zumindest reduziert wird.

Im Folgenden wird die Erfindung mit Bezug auf ein in den Figuren gezeigtes Ausführungsbeispiel im Detail beschrieben, wobei anzumerken ist, dass dieses Ausführungsbeispiel lediglich der Erläuterung einzelner technischer Merkmale dient. In der Zeichnung zeigen:
Fig. 1 eine Anordnung zum Erhöhen eines Anpressdrucks unabhängig vom Einbau in ein Fahrzeug, und
Fig. 2 eine schematisch durch Räder und Fahrtrichtung angedeutete Einbauorientierung der Anordnung von Fig. 1 in einem Fahrzeug.

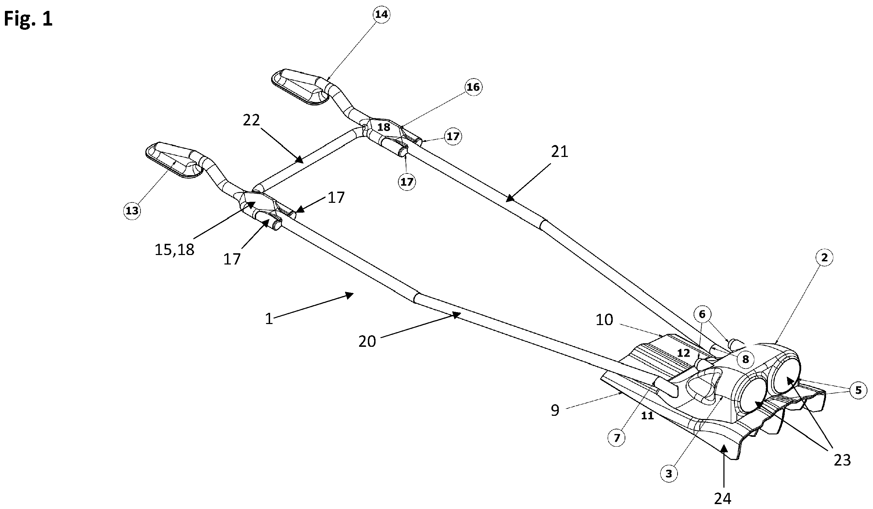

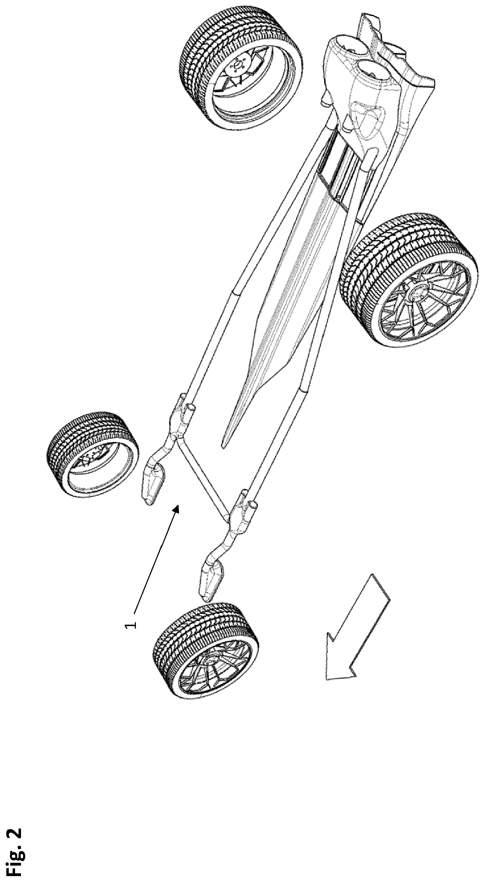

Die in Fig. 1 und 2 gezeigte Vorrichtung zum Erhöhen eines Anpressdrucks bei einem Kraftfahrzeug, insbesondere Sport- oder Rennwagen, umfasst einen als Ansaugeinrichtung wirkenden Ventilator 5 und eine Ansaugkanalanordnung 1, die mehrere Ansaugöffnungen 9,10,13,14 aufweist und mit dem Ventilator 5 gekoppelt ist, so dass dieser im Betrieb Luft durch die Ansaugöffnungen 9,10,13,14 absaugt und an anderer Stelle ausstößt.

Die Ansaugkanalanordnung 1 und die Ansaugöffnungen 9,10,13,14 sind so angeordnet und ausgestaltet, dass sie an einem Kraftfahrzeug anbringbar ist, um Luft im Bereich eines Unterbodens des Kraftfahrzeuges an mehreren in Längs- und/oder Querrichtung des Unterbodens beabstandeten Bereichen abzusaugen und durch Erzeugen eines lokalen Unterdrucks in diesen Bereichen einen Anpressdruck des Kraftfahrzeugs gegen eine Fahrbahnoberfläche zu erhöhen sowie dessen Verteilung einzustellen.

Mindestens ein Ventilmittel ist an der Ansaugkanalanordnung 1 vorgesehen, um eine von zumindest einigen der Ansaugöffnungen 9,10,13,14 angesaugte Luftmenge einzustellen. Das Ventilmittel wird durch eine Steuereinrichtung selektiv angesteuert, die mit dem Ventilmittel zur Ansteuerung desselben gekoppelt ist, und zwar vorzugsweise abhängig von einer Fahrsituation des Fahrzeugs, in das die Vorrichtung eingebaut ist.

Die Ansaugeinrichtung umfasst im gezeigten Beispiel zwei Ventilatoren 5, die nebeneinander in separaten Kammern 3,4 eines Ansauggehäuses 2 angeordnet sind und jeweils von einem eigenen Elektromotor 6 angetrieben sind. Die Kammern verfügen über jeweils mindestens zwei Einlass- oder Ansaugports 7,8,11,12 und einen zentralen Auslassport 23, der hier nach hinten geöffnet ist. Zwei der Einlassports 7,8 sind jeweils mit einem Ansaugstrang 20,21 der Ansaugkanalanordnung 1 kommunizierend verbunden, wobei die Ansaugstränge 20,21 hier als rohrartige Teile ausgebildet sind, die von den Einlassports 7,8 weg etwas nach Außen (links bzw. rechts) und zu einer Vorderseite (bezogen auf die später noch erläuterte Einbauorientierung in einem Fahrzeug und eine sich daraus ergebende Fahrzeug-Mittelachse in Längsrichtung und Fahrzeug-Mittelachse in Querrichtung) führen. Die Ansaugöffnungen 13,14 an der Vorderseite sind an vorderen Endabschnitten der Ansaugstränge 20,21 ausgebildet und jeweils zur Fahrzeugmitte und nach hinten gerichtet.

Die Ansaugöffnungen 9,10 im hinteren Bereich sind in einem Formteil 24 unter dem Ansauggehäuse 2 der Ansaugeinrichtung integriert und haben einen etwas geringeren Abstand in der Querrichtung als die Ansaugöffnungen 13,14 im vorderen Bereich. Die Ansaugöffnungen 9,10 sind hier nach vorne gerichtet.

Die einzelnen Ansaugöffnungen 9,10,13,14 haben trichterartige Einlasserweiterungen, die zu dem abzusaugenden Bereich des Unterbodens gerichtet sind, um die Einströmung der abgesaugten Luft zu fördern.

Die Ansaugkanalanordnung 1 umfasst im gezeigten Beispiel einen optionalen Verbindungsstrang 22, über den der erste und der zweite Ansaugstrang 20,21 miteinander gekoppelt sind.

Bei dem gezeigten Beispiel ist jeweils ein Ventilmittel im Bereich der Verbindung des Verbindungsstrangs mit den beiden linken und rechten Ansaugsträngen angeordnet. Das Ventilmittel ist als eine Art Motor-Klappenventil ausgebildet, das eine Kammer 15,16 aufweist, in die Rohrstutzen von den vorderen Ansaugöffnungen 13,14 und die Ansaugstränge 20,21 sowie der Verbindungsstrang 22 münden. Eine in der Kammer bewegbar angeordnete Klappe 18 wird vorzugsweise mittels Elektromotoren bewegt, um den Öffnungsgrad bzw. Durchfluß von den vorderen Ansaugöffnungen in die Ansaugstränge und den Verbindungsstrang einzustellen. Insbesondere bei längeren Ansaugleitungen können im Bereich der Kammern 15, 16 Zwischenventilatoren angeordnet sein, welche über zweite Elektromotore 17 drehend angetrieben werden und die Luftansaugung unterstützen.

Das Ventilmittel ist generell ein mechanisch betätigtes Stellventil, insbesondere ein elektromagnetisch oder elektromotorisch oder pneumatisch betätigtes Stellventil, beispielsweise wie gezeigt ein mechanisch betätigtes Scheiben- oder Klappenventil, um die Betätigung über die Steuereinrichtung zu ermöglichen. Es kann ein Servoventil oder ein Proportionalventil sein, das die Durchlassöffnung stufenlos verstellen kann. Es kann in einer einfachen Variante aber auch ein Ventil sein, das nur zwischen einer vollständig geöffneten Stellung und einer vollständig geschlossenen Stellung umgeschaltet werden kann.

Obwohl im gezeigten Beispiel die Ansaugkanalanordnung 1 lediglich eine Ansaugöffnung auf jeder Seite (links/rechts) und jeweils vorne und hinten besitzt, können weitere Ansaugöffnungen an unterschiedlichen Positionen der Ansaugkanalanordnung 1 vorgesehen sein.

In einer minimalen Ausgestaltung kann ein einzelnes Ventilmittel genügen, um eine Änderung der Ansaugmengen zwischen mehreren Bereichen des Unterbodens über dort angeordnete Ansaugöffnungen einzustellen. Es können in der Ansaugkanalanordnung aber auch mehrere Ventilmittel so angeordnet werden, dass die gewünschte Verteilung von Unterdruckzonen mit unterschiedlichem Unterdruck unter dem Fahrzeug erreicht werden kann. Mehrere Ansaugöffnungen können auch gruppenweise einzelnen Abschnitten der Ansaugkanalanordnung zugeordnet sein, wobei ein Ventilmittel die über den Abschnitt abgesaugte Luftmenge zentral steuert.

Es kann aber auch jeweils ein Ventilmittel direkt an einzelnen Ansaugöffnungen und/oder an den Ansaugports 7,8,11,12 der Ansaugeinrichtung angeordnet sein.

Die (nicht gezeigte) Steuereinrichtung ist konfiguriert, um das bzw. die Ventilmittel so anzusteuern, dass diese selektiv geöffnet bzw. geschlossen werden, um die durch die Ansaugöffnungen angesaugten Luftmengen zu verändern, mit dem Ziel, dass die durch die Absaugung der Luft erzeugten Bereiche lokalen Unterdrucks in der Längs- und/oder Querrichtung des Unterbodens verschiedene Unterdrücke aufweisen.

Dazu ist die die Steuereinrichtung insbesondere vorzugsweise konfiguriert, dass sie das bzw. die Ventilmittel abhängig von einer Fahrsituation selektiv ansteuern kann, um die Unterdruckverteilung unter dem Fahrzeug gezielt zu beeinflussen und dadurch den erzeugten Anpressdruck des Fahrzeugs, genauer dessen Verteilung, entsprechend der Fahrsituation einzustellen, um die übertragbaren Antriebskräfte und erzielbare Geschwindigkeiten des Fahrzeugs, besonders bei Kurvenfahrten zu maximieren.

Die der Ansteuerung zugrundeliegende Erfassung und Ermittlung der Fahrsituation erfolgt durch Auswertung von Signalen von bordeigenen Sensoren und/oder einer Steuerungselektronik des Fahrzeugs oder externen Datenquellen, umfassend einen oder mehrere der folgenden Parameter: Lenkeinschlag, Querbeschleunigung, Längsbeschleunigung, Verzögerung, Geschwindigkeit, charakteristische Bewegungen des Fahrzeugs, Umgebungsparameter. Die Ansteuerungslogik ist als Programm in der Steuereinrichtung hinterlegt.

In einer funktionalen Erweiterung kann die Steuereinrichtung konfiguriert sein, um das oder die Ventilmittel und den Ventilator 5 so anzusteuern, dass ein über Ansaugöffnungen, insbesondere die nach vorne gerichteten hinteren Ansaugöffnungen 9,10, in die Ansaugkanalanordnung 1 aufgrund eines Fahrtwinds aufgenommener Luftstrom den Ventilator 5 antreibt und dieser als Generator arbeitet. Diese funktionale Erweiterung erlaubt die Nutzung der Vorrichtung zur Rekuperation von Energie in Phasen, in denen die Erzeugung von Anpressdruck nicht erforderlich ist, und die Ansaugvorrichtung (der oder die Ventilatoren) nicht als solche arbeitet. Sofern erforderlich kann die Ansaugkanalanordnung für diese Funktion mit einem weiteren Ansaugstrang versehen sein, der zu einer Position am Fahrzeug führt und dort eine Ansaug- bzw. Einlassöffnung aufweist, wo der Fahrtwind verstärkt auftrifft. Die Ansaugkanalanordnung kann dazu auch noch ein weiteres, dem weiteren Ansaugstrang zugeordnetes Ventilmittel aufweisen, das von der Steuereinrichtung betätigt wird, um die Einströmung des Fahrtwinds in den weiteren Ansaugkanalstrang zu ermöglichen und die Rekuperationsfunktion zu aktivieren.

In einer noch weiteren funktionalen Erweiterung kann die Ansaugkanalanordnung einen noch weiteren Ansaugstrang aufweisen, der zu einem Motorraum des Fahrzeugs führt, und die Steuereinrichtung kann konfiguriert sein, um ein in der Ansaugkanalanordnung angeordnetes weiteres, dem noch weiteren Ansaugstrang zugeordnetes Ventilmittel sowie den Ventilator der Ansaugeinrichtung vorzugsweise in Abhängigkeit von einer Temperatur des Motorraums anzusteuern, um warme Luft zur Kühlung des Motorraums von diesem abzusaugen und als Komponente des Temperaturmanagements des Fahrzeugs zu wirken.

Die Fig. 2 zeigt die erfindungsgemäße Vorrichtung in sehr stark schematisierter Darstellung in einem Kraftfahrzeug, insbesondere Sport- oder Rennwagen, der hier nur durch die Räder und die Fahrtrichtung nach vorne als Pfeil angedeutet ist. Die Ansaugkanalanordnung ist an dem Kraftfahrzeug so angebracht, dass im Betrieb Luft im Bereich eines Unterbodens einer Karosserie des Kraftfahrzeugs über die mehreren Ansaugöffnungen an mehreren in Längs- und/oder Querrichtung des Unterbodens beabstandeten Bereichen selektiv abgesaugt werden kann, um durch Erzeugen eines lokalen Unterdrucks einen Anpressdruck des Fahrzeugs gegen eine Fahrbahnoberfläche zu erhöhen. Die Ansaugstränge können entlang dem Unterboden verlaufen oder in der Karosserie eingebaut sein.

Die Ansaugeinrichtung ist vorzugsweise im Heck des Fahrzeugs aufgenommen, so dass aus dem Auslassport 23 ausgestossene Luft nach hinten gerichtet ist und einen im Vergleich zur Antriebsleistung des Motors allerdings vernachlässigbaren Beitrag zum Vortrieb leisten kann. Der Auslassport 23 sollte allerdings so ausgerichtet werden, dass er die aerodynamische Strömungsführung um das Fahrzeug nicht negativ beeinträchtigt. Vorzugsweise ist die Ansaugeinrichtung daher in geringer Höhe über der Fahrbahnoberfläche positioniert.

## Patentansprüche

1. Vorrichtung zum Erhöhen eines Anpressdrucks bei einem Kraftfahrzeug, insbesondere Sport- oder Rennwagen, mit
- einem als Ansaugeinrichtung wirkenden Ventilator (5),
- einer Ansaugkanalanordnung (1), die mehrere Ansaugöffnungen (9,10,13,14) aufweist und mit dem Ventilator (5) gekoppelt ist, um Luft durch die Ansaugöffnungen (9,10,13,14) abzusaugen und durch den Ventilator (5) auszustossen, wobei die Ansaugkanalanordnung (1) und die Ansaugöffnungen (9,10,13,14) so angeordnet und ausgestaltet sind, dass sie an einem Kraftfahrzeug anbringbar ist, um Luft im Bereich eines Unterbodens des Kraftfahrzeuges an mehreren in Längs- und/oder Querrichtung des Unterbodens beabstandeten Bereichen abzusaugen und durch Erzeugen eines lokalen Unterdrucks einen Anpressdruck des Kraftfahrzeugs gegen eine Fahrbahnoberfläche zu erhöhen,
- mindestens einem Ventilmittel (15,16,17,18), das an der Ansaugkanalanordnung (1) vorgesehen ist, um eine von zumindest einigen der Ansaugöffnungen (9,10,13,14) angesaugte Luftmenge einzustellen, und
- einer Steuereinrichtung, die mit dem mindestens einen Ventilmittel (15,16,17,18) zur Ansteuerung desselben gekoppelt ist, um das mindestens eine Ventilmittel (15,16,17,18), vorzugsweise abhängig von einer Fahrsituation, selektiv anzusteuern.

2. Vorrichtung nach Anspruch 1,
**dadurch gekennzeichnet,**
**dass** mindestens eine Ansaugöffnung (9,13) an einer linken Fahrzeugseite und eine andere Ansaugöffnung (10,14) an einer rechten Fahrzeugseite, jeweils bezogen auf eine Fahrzeug-Mittelachse in Längsrichtung im eingebauten Zustand, angeordnet ist.

3. Vorrichtung nach Anspruch 1 oder 2,
**dadurch gekennzeichnet,**
**dass** mindestens eine Ansaugöffnung (13,14) in einem vorderen Bereich des Fahrzeugs und mindestens eine andere Ansaugöffnung (9,10) in einem hinteren Bereich des Fahrzeugs, jeweils bezogen auf eine Fahrzeug-Mittelachse in Querrichtung im eingebauten Zustand, angeordnet ist.

4. Vorrichtung nach einem der Ansprüche 1 bis 3,
**dadurch gekennzeichnet,**
**dass** die an einer/der auf eine Fahrzeug-Mittelachse in Längsrichtung im eingebauten Zustand bezogenen linken Fahrzeugseite angeordnete mindestens eine Ansaugöffnung (13) über einen ersten Ansaugstrang (20) und die an einer/der auf die Fahrzeug-Mittelachse in Längsrichtung im eingebauten Zustand bezogenen rechten Fahrzeugseite angeordnete mindestens eine Ansaugöffnung (14) über einen zumindest abschnittsweise von dem ersten Ansaugstrang (20) getrennten zweiten Ansaugstrang (21) mit dem Ventilator (5) leitungsverbunden sind.

5. Vorrichtung nach Anspruch 4,
**dadurch gekennzeichnet,**
**dass** der erste und der zweite Ansaugstrang (20,21) über mindestens einen Verbindungsstrang (22) miteinander gekoppelt sind.

6. Vorrichtung nach einem der Ansprüche 1 bis 5,
**dadurch gekennzeichnet,**
**dass** das mindestens eine Ventilmittel (15,16,17,18) ein mechanisch betätigtes Stellventil ist, insbesondere ein elektromagnetisch oder elektromotorisch oder pneumatisch betätigtes Stellventil.

7. Vorrichtung nach Anspruch 6,
**dadurch gekennzeichnet,**
**dass** das mindestens eine Ventilmittel (15,16,17,18) ein mechanisch betätigtes Scheiben- oder Klappenventil ist.

8. Vorrichtung nach einem der Ansprüche 1 bis 7,
**dadurch gekennzeichnet,**
**dass** die Steuereinrichtung konfiguriert ist, um das mindestens eine Ventilmittel (15,16,17,18) so anzusteuern, dass die durch die Absaugung der Luft erzeugten Bereiche lokalen Unterdrucks in der Längs- und/oder Querrichtung des Unterbodens verschiedene Unterdrücke aufweisen.

9. Vorrichtung nach Anspruch 8,
**dadurch gekennzeichnet,**
**dass** die Steuereinrichtung konfiguriert ist, um die Fahrsituation über Signale von bordeigenen Sensoren und/oder einer Steuerungselektronik des Fahrzeugs zu ermitteln, umfassend einen oder mehrere der folgenden Parameter: Lenkeinschlag, Querbeschleunigung, Längsbeschleunigung, Verzögerung, Geschwindigkeit, charakteristische Bewegungen des Fahrzeugs, Umgebungsparameter.

10. Vorrichtung nach einem der Ansprüche 1 bis 9,
**dadurch gekennzeichnet,**
**dass** die Steuereinrichtung konfiguriert ist, um das mindestens eine Ventilmittel (15,16,17,18) und den Ventilator (5) so anzusteuern, dass ein über Ansaugöffnungen in die Ansaugkanalanordnung (1) aufgrund eines Fahrtwinds aufgenommener Luftstrom den Ventilator (5) antreibt und dieser als Generator arbeitet.

11. Vorrichtung nach einem der Ansprüche 1 bis 10,
**dadurch gekennzeichnet,**
**dass** die Ansaugkanalanordnung (1) einen weiteren Ansaugstrang aufweist der zu einem Motorraum des Fahrzeugs führt.

12. Vorrichtung nach Anspruch 11,
**dadurch gekennzeichnet,**
**dass** die die Ansaugkanalanordnung (1) ein weiteres, dem weiteren Ansaugstrang zugeordnetes Ventilmittel aufweist, und die Steuereinrichtung konfiguriert ist, um das weitere Ventilmittel und den Ventilator (5), vorzugsweise in Abhängigkeit von einer Temperatur des Motorraums, anzusteuern, um warme Luft zur Kühlung des Motorraums von diesem abzusaugen.

13. Vorrichtung nach einem der Ansprüche 1 bis 12,
**dadurch gekennzeichnet,**
**dass** zumindest zwei als die Ansaugeinrichtung wirkende Ventilatoren (5) aufweist, die in separaten Kammern (3,4) angeordnet sind, die mit separaten Ansaugsträngen (20,21) der Ansaugkanalanordnung (1) kommunizieren.

14. Vorrichtung nach einem der Ansprüche 1 bis 13,
**dadurch gekennzeichnet,**
**dass** die Ansaugöffnungen (9,10,13,14) trichterartige Einlasserweiterungen haben, die zu dem abzusaugenden Bereich des Unterbodens gerichtet sind.

15. Kraftfahrzeug, insbesondere Sport- oder Rennwagen, mit
einer Vorrichtung nach einem der Ansprüche 1 bis 14, deren Ansaugkanalanordnung an dem Kraftfahrzeug so angebracht ist, dass im Betrieb Luft im Bereich eines Unterbodens einer Karosserie des Kraftfahrzeugs über die mehreren Ansaugöffnungen an mehreren in Längs- und/oder Querrichtung des Unterbodens beabstandeten Bereichen selektiv abgesaugt werden kann, um durch Erzeugen eines lokalen Unterdrucks einen Anpressdruck des Fahrzeugs gegen eine Fahrbahnoberfläche zu erhöhen.
